# EUROPÄISCHE PATENTSCHRIFT

(11) **EP 1 905 261 B1**
(45) Veröffentlichungstag und Bekanntmachung des Hinweises auf die Patenterteilung: **06.10.2010**
(21) Anmeldenummer: 06761789.4
(22) Anmeldetag: 12.07.2006
(51) Int. Cl.: H04W 36/36

(54) **OPTIMIERUNG DER BETRIEBSBEREITSCHAFTSZEITEN UND ZELLWECHSELPERFORMANCE VON MOBILEN ENDGERÄTEN**
OPTIMISING THE OPERATIONAL TIMES AND CELL CHANGE PERFORMANCE OF MOBILE TERMINALS
OPTIMISATION DES TEMPS DE FONCTIONNEMENT ET DES PERFORMANCES DE CHANGEMENT DE CELLULE DE TERMINAUX MOBILES

(30) Priorität: 21.07.2005 DE 102005034750; 21.07.2005 DE 102005034760; 01.08.2005 DE 102005036583
(43) Veröffentlichungstag der Anmeldung: 02.04.2008
(73) Patentinhaber: T-Mobile International AG, 53227 Bonn (DE)
(72) Erfinder: KLATT, Axel, 50996 Köln (DE)
(74) Vertreter: Riebling, Peter
(86) Internationale Anmeldenummer: PCT/DE2006/001203
(87) Internationale Veröffentlichungsnummer: WO 2007/009433

(56) Entgegenhaltungen:
- EP-A- 1 286 561
- US-A1- 2002 111 180
- US-A1- 2002 123 348
- "Universal Mobile Telecommunications System (UMTS)" ETSI STANDARDS, EUROPEAN TELECOMMUNICATIONS STANDARDS INSTITUTE, SOPHIA-ANTIPO, FR, Bd. 3-R2, Nr. V660, Juni 2005 (2005-06), XP014030557 ISSN: 0000-0001 in der Anmeldung erwähnt

## Beschreibung

Die vorliegende Erfindung betrifft ein Verfahren, und eine Anordnung zur Optimierung der Betriebsbereitschaftszeiten und Zellwechselperformance von mobilen Endgeräten wie sie in einem zellularen Mobilfunksystem Verwendung finden, beispielsweise nach GSM- oder UMTS-Standard.

In zellularen Mobilfunknetzen sowohl nach GSM- als auch nach UMTS-Standard, wie durch 3GPP [www.3gpp.org] definiert, erfolgt der Zellwechsel im sog. Idle Mode oder in bestimmten Stadien des connected mode bei UMTS (URA_PCH, CELL_PCH und CELL_FACH) durch einen Mobilfunkgerät basierten Zellenwechsel-Algorithmus. Gleiches gilt für den Zellwechsel in paktetbasierten GPRS. Für diesen Zellenwechsel informiert das Radionetzwerk über den so genannten Rundfunkkanal (BCCH) das entsprechende Endgerät über potentielle Nachbarzellen.

Die Kontrolle über die abgestrahlten Nachbarschaftszellen obliegt dem Netzwerkbetreiber. Hierbei können eine Vielzahl möglicher Nachbarschaftbeziehungen abgestrahlt werden, die auch Nachbarschaftszellen einer anderen Radio-Zugangstechnologie (GSM, UMTS, cdma2000) oder Frequenz (beispielsweise bei UMTS) umfassen können. Erweiterungen für bestehende Mobilfunktechnologien können auch die Bekanntmachung weiterer Technolgien (bspw. WLAN, WiMAX, etc) auf dem Rundfunkkanal von beispielsweise UMTS ermöglichen, siehe z.B. die DE10302404A1.

Die folgenden Ausführungen des Standes der Technik beziehen sich vornehmlich auf eine Anwendung nach GSM- und UMTS-Standard. Mobilfunkendgeräte sind nach dem 3GPP-Standards verpflichtet, konfigurierte Nachbarschaftszellen entweder kontinuierlich oder mit einer definierten Periodizität zu messen, um einen potentiellen Zellwechsel auf eine funktechnisch bessere Zelle anzustoßen. Die Details dieser Anforderungen sind für GSM-Mobilfunkgeräte in 3GPP TS 45.008 und für UMTS-Mobilfunkgeräte in 3GPP TS 25.304, TS 25.133 und TS 25.331 definiert. Die vorgenannten technischen Spezifikationen beschreiben auch, wann ein Zellwechsel durchzuführen ist und welche Kriterien der potentiellen Zielzelle erfüllt sein müssen, damit ein Zellwechsel auch wirklich durch das Mobilfunkendgerät durchgeführt werden darf.

Weiterhin definieren dieses technischen Spezifikationen, welche weiteren Prozeduren nach einem Zellwechsel auszuführen sind, beispielsweise die Durchführung der sog. CELL UPDATE Prozedur in einem UMTS-System für Mobilfunkendgeräte im RRC connected mode Status CELL_PCH.

Die vorstehende Beschreibung des Standes der Technik bezieht sich ausschließlich auf den Radioteil (AS - Access Stratum) eines zellularen Mobilfunknetzes.

Weitere Prozeduren und Anforderungen an das Verhalten von Mobilfunkendgeräten werden von dem hinter dem Radionetzwerk liegenden Kern-Netzwerk (CN - Core Network) gestellt: Die Verwaltung der Mobilität eines Mobilfunkgerätes wird je nach Status des Mobilfunkendgerätes durch das Kernnetz oder durch das Radionetzwerk verwaltet (idle vs. connected mode). Der Begriff in den technischen Standards nach 3GPP hierfür lautet "Mobilitäts-Management" (engl. MM - mobility-management im "Non Access Stratum" (NAS)). Zur Verwaltung der Mobilität durch das Kernnetz ist ein zellulares Mobilfunksystem in sog. Location Areas (LA) und Routing Areas (RA) aufgeteilt.

Wenn sich ein Mobilfunkendgerät erstmals mit dem Kernnetz registriert ("Attach"-Prozedur), ist der Standort des Mobilfunkendgerätes dem Kernnetz mit der Granularität der Loaction Area bekannt. Für einen für das Mobilfunkendgerät bestimmten (Sprach)-Anruf (Mobile Terminated Call - MTC), führt das CS (Circuit Switched) Kernnetz - hier das sog. Mobile Switching Center (MSC) - eine Rufprozedur (Paging) in der gesamten Loaction Area durch, auf die das angerufen Mobilfunkendgerät mit definierten Prozeduren, siehe die 3GPP TS 24.008, zu reagieren hat. Für paketorientierte (PS) Datenverbindungen kommt das Konzept der Routing Areas (RA) zum Einsatz. Dieses Mobilitäts-Management Prinzip ist vergleichbar mit dem Location Area Prinzip, wird jedoch durch ein für den paketorientierten Datenverkehr bestimmten Kernnetzelement - den "Serving Gateway Serving Anode - SGSN - überwacht. Die Regeln und Prozeduren sind in 3GPP TS 23.060 detailliert beschrieben.

Ein weiteres grundlegendes Prinzip sowohl für das CS (MSC) als auch das PS (SGSN) Kernnetz ist, dass die Mobilität eines Mobilfunkendgerätes jeweils auf der Granularität LA bzw. RA überwacht wird und Mobilfunkendgeräte bei einem Wechsel der LA bzw. RA das jeweilige Kernnetzelement (MSC oder SGSN) über diesen durchgeführten Wechsel benachrichtigen müssen. Diese Prozeduren werden Loaction Area Update (LAU) und Routing Area Update (RAU) genannt.

In Mobilfunksystemen gemäß GSM- oder UMTS-Standard gibt es auch die Möglichkeit, den Zugang eines Mobilfunkendgerätes zu bestimmten Location- oder Routing Areas durch das Kernnetz (NAS) zu verhindern. Hierzu hat das Kernnetz die Möglichkeit ein Location- oder Routing Area Update eines Mobilfunkentgerätes abzulehnen, wobei es dem Mobilfunkentgerät den Ablehnungsgrund mitteilt. Dieses Verfahren ist in 3GPP TS 24.008 definiert und wird Location Registration Reject genannt.

3GPP TS 24.008 definiert auch eine Anzahl von Ablehnungsgründen und die daraus entstehenden Konsequenzen und Anforderungen für ein Mobilfunkentgerät. Beispiele für die nach einer LAU Ablehnung geforderte Prozeduren seitens des Mobilfunkentgerätes sind die Durchführung einer PLMN Selection beim Empfang des Grundes #13 (d.h. das Suchen eines neuen Netzbetreibers (PLMN)), das Suchen einer anderen Nachbarzelle innerhalb einer anderen Loaction/Routing Area beim Empfang einer Ablehnung mit dem Gründen #14 oder #15 etc.... Für Details sei hier auf 3GPP TS 24.008 verwiesen.

Die Ablehnung eines Loaction Area Updates durch das Kernnetz hat nach 3GPP Spezifikationen auch Auswirkungen auf das Verhalten des Mobilfunkentgerätes im Radionetzwerk bei der Auswahl potentieller Nachbar-Zielzellen:

Nach TS 25.304 und TS 45.008 ist es Mobilfunkendgeräten nur erlaubt, eine Nachbarzelle für einen Zellwechsel auszuwählen, wenn bestimmte Erfordernisse von dieser Zelle erfüllt sind. Beispielsweise muß eine Zelle die als Kandidat für einen potentiellen Zellwechsel herangezogen wird, zum aktuel benutzten PLMN gehören (also die gleiche PLMN Identität wie die aktuelle Zelle haben - eine Besonderheit spielt hierbei das Konzept der "äquivalenten PLMNs" (ePLMN), welches dem Mobilfunkendgerät unter bestimmten Voraussetzungen erlaubt in ein anderes PLMN zu wechseln als würden diese Nachbarzellen zum aktuellen PLMN gehören, siehe TS 24.008).

Weitere notwendige Bedingungen um auf eine Zielzelle zu wechseln sind dass die Zielzelle nicht gesperrt sein darf ("barred cell"), nicht für einen Betreiber reserviert sind darf (nur UMTS) ("operator reserved cell") und letztendlich nicht in der "Liste der verbotenen Loaction Areas für Roaming" stehen darf, siehe TS 25.304. Diese Liste enthält alle Location Area Identitäten in denen ein Location Area Update einmal für eine angestoßenen Zellwechsel abgelehnt wurde.

Der besondere Nachteil des heutigen Standes der Technik ist, dass ein Mobilfunkendgerät weder nach GSM- noch nach UMTS-Standard in der aktuellen Zelle genügend Information über die Nachbarzellen erhält, um das funktechnische Vermessen und die Identifizierung der potentiellen Zielzelle zu unterdrücken.

Um zu erkennen, ob eine Nachbarzelle - die ALLEN Mobilfunkendgeräten als potentielles Ziel für einen Zellwechsel mittels Cell Reselection über den Rundfunkkanal (BCCH) der aktuellen Zelle bekannt gegeben wurde - auch die erforderlichen Bedingungen für einen Zellwechsel erfüllt, muß sich das Mobilfunkendgerät nach der Messung der potentiellen Zielzelle mit dieser synchronisieren und deren Rundfunkkanal (BCCH) auslesen, um an die notwendigen Informationen zu kommen (PLMN id der Zielzelle, zugehörige Location oder Routing Area Identität, "barred Status", sonstige Zellkennung, ... ).

Das Ausstrahlen dieser Informationen in der eigentlichen Ursprungszelle wurde aus Gründen der Kapazität bewusst vermieden. Zu beachten ist, dass mit dem heutigen Stand der Technik für einen durch das Mobilfunkendgerät gesteuerten Zellwechsel die notwendigen Informationen über den Rundfunkkanal einer Zelle bereitgestellt werden, und diese Informationen für alle in dieser Zelle befindlichen Mobilfunkendgeräte gleich sind.

Es ist also nach dem heutigen Stand der Technik nicht ohne weiteres möglich, verschiedenen Mobilfunkendgeräten unterschiedliche Nachbarschaftsinformationen über den Rundfunkkanal zur Verfügung zu stellen.

Anzumerken ist noch, dass die Qualifikation der potentiellen Nachbarzelle für jedes Mobilfunkendgerät unterschiedlich/spezifisch sein kann (manchen Mobilfunkendgeräten ist der Zugang zu bestimmten Location Areas versagt, anderen hingegen nicht). Der letzte Fall ist hauptsächlich aus den Anforderungen der Netzbetreiber definiert und kann in verschiedenen Mobilfunknetzen unterschiedlich ausgelegt sein.

Die US 2002/0123348 A1 offenbart ein Verfahren zur teilweisen Unterstützung der Mobilität zwischen Mobilkommunikationsnetzen, bei dem ein mobiles Endgerät das bei einem ersten Netzbetreibers registriert ist, beim Betrieb in dem Mobilkommunikationsnetz des ersten Netzbetreibers netzspezifische Kennungen von nicht nutzbaren Nachbarschaftszellen anderer Netzbetreiber, zum Beispiel in einer Liste von "forbidden Location Areas LA", zwischenspeichert und bei den Entscheidungskriterien für einen Zellwechsel verwendet. Trotzdem muss gemäß dem damals geltenden GSM bzw. UMTS Standard eine funktechnische Messung aller Zellen, also auch der "verbotenen" Zellen, erfolgen..

Mit der Druckschrift EP 1 286 561 A1 wird ein Verfahren zur Auswahl eines neuen, geographischen Übertragungsbereich für einen mobilen Funkanschluss offenbart, wobei von einem Funknetzwerkzugang Informationen einer Liste von einem oder mehreren Übertragungsbereichen empfangen werden, welche mobile Funkanschlüsse Dienste oder keine Dienste erhalten und die empfangenen Information zur Anforderung des Dienstes eines neuen Übertragungsbereichs überprüft werden, wobei die Auswahl eines geographischen Übertragungsbereiches in Abhängigkeit der empfangenen Informationen bestimmt ist.

Diese Druckschrift weist ebenfalls den Nachteil auf, dass zur Vermeidung von unnötigen Übertragungen von Informationen keine Informationen gespeichert werden, welche eine weitere Abfrage und Übertragung von potentiellen Funknetzwerkzugängen für einen Funkanschluss vermeidet

Die Aufgabe der Erfindung besteht darin, ein Verfahren zur Optimierung der Betriebsbereitschaftszeiten und Zellwechselperformance von mobilen Endgeräten anzugeben, das die Möglichkeit bietet, dass verschiedene Mobilfunkendgeräte unterschiedliche Nachbarschaftsinformationen (die über den Rundfunkkanal zu Verfügung gestellt wurden) für das Cell Reselection nutzen und speichern.

Diese Aufgabe wird erfingdungsgemäß durch ein Verfahren mit den Merkmalen des Patentanspruchs 1 gelöst.

Vorteilhafte Ausgestaltungen und Weiterbildungen des erfindungsgemäßen Verfahrens sind in den jeweiligen Unteransprüchen angegeben.

Die Erfindung basiert im Wesentlichen darauf, die Anzahl von durch das Mobilfunkendgerät im Betrieb durchzuführenden Messungen zu reduzieren und somit insbesondere das funktechnische Vermessen und die Prozeduren zur Kennungsidentifizierung von Zellen, die sich nicht als Kandidaten für einen Zellwechsel eigenen, zu unterdrücken.

Die vorliegende Erfindung stellt eine wesentliche Verbesserung des Stands der Technik dar, da sie es ermöglicht, die funktechnische Vermessung von Nachbarzellen zu vermeiden, wenn ein Mobilfunkendgerät nach GSM-, UMTS- oder enhanced UTRAN-Standard diese Nachbarzelle schon einmal auf ihre Qualifikation als potentielle Zielzelle untersucht und festgestellt hat, dass sie für dieses Mobilfunkendgerät nicht als Zielzelle geeignet ist.

Gründe, warum die Zielzelle für das Mobilfunkendgerät nicht geeignet ist, sind im Stand der Technik aufgeführt.

Das vorgeschlagene Verfahren bezieht sich bei der Ausführung vornehmlich auf die Anwendung für den Fall, dass die Zielzelle für einen Zellwechsel nicht geeignet ist, da der Zugang zu dieser Zelle durch ein Location- oder Routing Area Update durch das Kernnetz bereits abgelehnt wurde.

Es kann als alternative Ausführung aber auch auf den Fall angewandt werden, dass die Zielzelle beispielsweise zu einen anderen PLMN gehört, die Zielzelle als "gesperrt" oder als "reserviert für Netzbetreiber" markiert ist.

Eine beispielhafte Ausführung des erfindungsgemäßen Verfahren wird im Folgenden erläutert.

Ausgangspunkt eines Ausführbeispiels des erfindungsgemäßen Verfahrens ist ein nationales Roaming Abkommen zwischen zwei Mobilfunknetzbetreibern mit unterschiedlicher PLMN Identität innerhalb eines Landes.

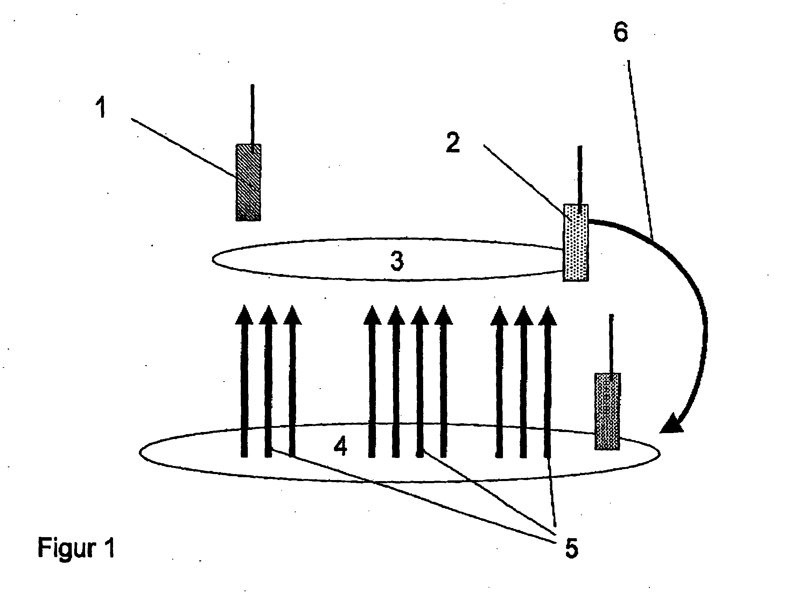

Dieses nationale Roaming Abkommen erlaubt es beispielsweise den Kunden des Betreibers B (PLMN B) in den Gebieten des Betreibers A (PLMN A) zu "roamen" (also Mobilfunkdienstleistungen des Betreibers A in Anspruch zu nehmen), wo Betreiber B keine eigene Mobilfunkversorgung anbietet. Weiterhin sieht dieses Ausführungsbeispiel vor, dass beispielsweise der Betreiber A ein Mobilfunknetz sowohl nach GSM- als auch nach UMTS-Standard betreibt. Dieser Betreiber hat sein GSM-Netz so konfiguriert, dass ein Mobilfunkendgerät UE welches sowohl GSM als auch UMTS unterstützt, in Gebieten wo es eine UMTS-Versorgung des Betreibers A gibt, automatisch nach UMTS wechselt, ohne dass der Mobilfunknutzer eingreifen muß (per UE basiertem cell reselection). Diese Anordnung ist in Figur 1 dargestellt.

Der automatische Wechsel von sog. dual-mode Mobilfunkendgeräten (dual-mode UEs) - also Geräten die sowohl GSM als auch UMTS unterstützen - wird durch die Abstrahlung von Nachbarschaftsinformationen über das UMTS-Netzwerk im GSM-Netz in den Gebieten wo ein UMTS-Netz über dem GSM-Netz liegt - ermöglicht. Zu beachten ist, dass mit dieser für heutige kombinierte GSM-/UMTS-Netze typischen Parametrisierung ALLE dual-mode UEs der cell reselection (also dem UE basierten Zellwechsel) von GSM nach UMTS folgen, sobald die UMTS-Netzqualität ausreichend gut ist.

Das beispielhafte nationale Roaming-Abkommen zwischen Betreiber A und B sieht beispielsweise weiterhin vor, dass die Kunden des Betreibers B das gesamte GSM-Netz des Betreibers A nutzen dürfen, sie jedoch keinen Zugang in den UMTS-Teil des Netzes des Betreibers A bekommen sollen (auch wenn die Kunden des Betreibers B, die sich im Netz des Betreibers A befinden, ein dual-mode UE haben, welches den Zugang zu UMTS prinzipiell unterstützen würde). Die Anforderung des beispielhaften nationalen Roaming-Abkommens sieht also vor, dass der Zugang der Kunden B (oder nur eines bestimmten Teiles dieser Kunden) zum UMTS-Netz des Betreibers A verhindert wird.

Beispielhaft kann dieses erreicht werden, indem der Zugangsversuch eines Mobilfunkendgerätes des Kunden des Betreibers B in das UMTS-Netz des Betreibers A unterdrückt wird. Um dieses zu erreichen hat Betreiber A sein GSM-/UMTS-Netz so konfiguriert, dass die Zellen der GSM- und UMTS-Netze sich jeweils in verschiednen Location Areas (LA) befinden und jeder Wechsel von GSM nach UMTS und UMTS nach GSM ein Location Area Update anstößt.

Das Kernnetz des Betreibers A hat nun die Möglichkeit, den Zugangsversuch eines Kunden von B, beispielsweise in den Location Areas, die die UMTS Technologie nutzen (oder auch nur einer Teilmenge) durch Ablehnung des Location Area Updates (LAU) mit einem entsprechenden Rückweisungscode zu unterbinden.

Heutige Implementierungen dieser Zurückweisungs-Prozedur erlauben eine Unterscheidung der Mobilfunkendgeräte etwa nach der Herkunft (beispielsweise anhand der IMSI). Der Zugang kann also Kunden von A zugelassen sein, während Kunden von B abgewiesen werden.

Der Stand der Technik erlaubt also das Abweisen des Kunden B - ohne UMTS Zugangserlaubnis - im UMTS-Netz von A, mittels eines Abweisen des LAU. Da jedoch durch die Konfiguration der Zellwechselparameter alle dual-mode fähigen Mobilfunkendgeräte in den Gebieten wo Betreiber A auch UMTS-Versorgung hat einen Zellwechsel von GSM nach UMTS anstoßen, jedoch nur die Mobilefunkendgeräte des Betreibers A auch in den Ziel-UMTS-Loaction Areas zugelassen werden, müssen die abgelehnten Mobilfunkendgeräte des Betreibers B den Zellwechsel aufgeben und verbleiben in der ursprünglichen GSM-Zelle. Hierbei ist zu beachten, dass der erste Zugangsversuch vom Zielnetz (UMTS-Netz des Betreibers A) aktiv durch ein LAU Reject abgewiesen wird. Weitere Zugangsversuche scheitern für bereits abgelehnte Mobilfunkendgerätes des Betreibers B daran, dass diese LA in der die Ablehnung erfolgte in der "Liste der verbotenen LA für Roaming" enthalten ist.

Der Stand der Technik erfordert jedoch von diesen Mobilfunkendgeräten, dass sie weiterhin den Zellwechselparametern in der ursprünglichen GSM-Zelle folgen und weiterhin potentielle Zielzellen (inklusive der konfigurierten UMTS-Zellen des Betreibers A) funktechnisch vermessen. Diese Anforderungen sind in den technischen Spezifikationen TS45.008 für GSM und 3GPP TS 25.304, TS25.133 und TS25.331 für UMTS definiert.

Kurzgefaßt ist der wesentliche Nachteil des Standes der Technik also die Erfordernis, die potentiellen Zielzellen gemäss der Konfiguration auf dem Rundfunkkanal der aktuellen Zelle zu vermessen AUCH wenn der Zugang zu dieser Zielzelle VERBOTEN ist.

Im beschriebenen Szenario würde also ein Mobilfunkendgerät des Betreibers B in den GSM-Zellen des Betreibers A verbleiben, müsste jedoch mit den Anforderungen in den o.g. Spezifikationen die für dieses Mobilfunkendgerät nicht geeigneten UMTS-Zielzellen weiterhin funktechnisch vermessen.

Diese Erfordernis hat deutliche negative Auswirkungen auf die Bereitschaftszeit des Mobilfunkendgerätes, da die unnötigen Messungen einen zusätzlichen Energieverbrauch für das Mobilfunkendgerät bedeuten.

Das erfindungsgemäße Verfahren schlägt demnach vor dass sich ein Mobilfunkendgerät "merkt" dass der Zugang zu einer bestimmten Nachbarzelle nicht möglich ist (beispielsweise, da der LAU in dieser Zelle bereits abgelehnt wurde). Zusätzlich zu der bereits erwähnten "Liste der verbotenen LA für Roaming" pflegt ein Mobilfunkendgerät also zusätzliche eine weitere Liste in der beispielsweise die Zell-Identitäten der Zellen ("Cell Id") oder andere charakteristische Merkmale die eine Nachbarzelle eindeutig identifizieren, vermerkt sind, in denen ein LAU fehlschlug, bzw. die Zellen, die ein Mobilfunkendgerät vermessen hat, die aber nicht für einen Zellwechsel benutzt werden konnten, da sie zu einer LA gehören, die in der "Liste der verbotenen LA für Roaming" enthalten ist. Beispiele für charakteristische Merkmale sind etwa die Frequenz einer Nachbarzelle bei GSM, der BSIC bei einer GSM Nachbarzelle, der Scrambling Code einer Nachbarzelle bei UMTS, eine Trägerfrequenz bei WLAN, eine "SSID" bei WLAN etc. Das erfindungsgemäße Verfahren macht hinsichtlich der Identität keinerlei Einschränkungen.

Hiernach könnte eine Mobilfunkendgerät mit den abgespeicherten Informationen die Messungen der Nachbarzellen, die sich ohnehin nicht als Kandidaten für einen Zellwechsel eignen, vermeiden und somit durch die Beschränkung auf die wirklichen möglichen Nachbarzellen seine Bereitschaftszeit verlängern, indem die unnötigen Messungen vermieden werden.

Im vorstehenden Szenario würde also ein Mobilfunkgerät eines Kunden von B im GSM-Netz von Betreiber A dem Zellwechsel nach UMTS folgen, dort jedoch aufgrund der Zugangsbeschränkung ("UMTS LAs nicht erlaubt für Geräte von B") ein LAU reject bekommen und anschließend wieder nach GSM wechseln.

Mit dem erfindungsgemäßen Verfahren könnten nun alle UMTS-Zeller (die zu der abgelehnten/verbotenen LA gehören) bei den folgenden Messungen verworfen werden, da ein Wechsel ohnehin nicht erlaubt ist

Einen besonderen Vorteil bietet das erfindungsgemäße Verfahren bei stationären Mobilfunkendgeräten die unterhalb der verbotenen UMTS-Versorgung des Betreibers A verbleiben und somit die notwendigen Messungen für einen ohnehin erfolglosen Zellwechsel nach UMTS komplett vermeiden können.

Um nach einer Änderung der Zugangsvoraussetzungen In die nun gesperrten (UMTS-) Location Areas den Zugang dennoch zu ermöglichen, schlägt das erfindungsmäße Verfahren vor, dass sich ein Mobilfunkendgerät die Ablehnung des Zugangs nur für eine bestimmte Zeit merkt (beispielsweise 24h oder bis es ausgeschaltet wurde).

Nach einem Ausschaltvorgang des Mobilfunkendgerätes, welches die Messungen oder Identifikationsprozeduren der nicht geeigneten Zielzellen unterdrückt hat, nimmt dieses das Messen oder die Identifikationsprozeduren dieser Zielzellen wieder auf, nachdem es wieder eingeschaltet wurde.

Dies gilt auch, wenn das Mobilfunkendgerät einen Zellwechsel in eine andere Zelle vorgenommen hat.

Ansonsten wäre dem Mobilfunkendgerät der Zugang zu den (UMTS-) LA nach einer Änderung des Abkommens zwischen den Betreibern A und B weiterhin versagt, da es die Messungen auf der ursprünglichen Zielzelle niemals von sich aus wieder aufnehmen würde (es sei denn, andere in TS 24.008 definierte Voraussetzen für das Löschen der "Liste der verbotenen LA für Roaming" sind erfüllt).

Eine Anwendung der Erfindung ist nicht nur für mobile Endgeräte nach GSM- oder UMTS-Standard denkbar, sondern auch auf andere Funknetztechnologlen (bspw. Wireless LAN (W-LAN), cdma2000, WiMAX, WiBro, enhanced UTRAN, etc.) übertragbar.

### Bezugszeichenliste

1. Kunde PLMN A (dual mode UE)
2. Kunde PLMN B (dual mode UE)
3. PLMN A (UMTS) - LA2
4. PLMN A (GSM) - LA1
5. Cell Reselection ( Neuwahl einer Zelle)
6. kein Zugang für PLMN B zu UMTS

## Patentansprüche

1. Verfahren zur Optimierung der Betriebsbereitschaftszeiten und Zellwechselperformance von mobilen Endgeräten in einem Mobilkommunikationsnetz mit benachbarten Funkzellen wobei ein mobiles Endgerät beim Betrieb in einem Mobilkommunikationsnetz netzspezifische Kennungen von nicht nutzbaren Nachbarschaftszellen zwischenspeichert und bei den Entscheidungskriterien für einen Zellwechsel verwendet, **dadurch gekennzeichnet, dass** das mobile Endgerät das funktechnische Vermessen und die Prozeduren zur Kennungsidentifizierung von Zellen, die sich nicht als Kandidaten für einen Zellwechsel eigenen, unterdrückt, und **dadurch** die Anzahl von durch das mobile Endgerät im Betrieb durchzuführenden Messungen reduziert wird.

2. Verfahren nach Anspruch 1, **dadurch gekennzeichnet, dass** das mobile Endgerät zur Vermeidung von unnötigen Messungen von Nachbarschaftszellen Informationen über bestimmte Zielzellen speichert und diese dazu verwendet, diese potentielle(n) Zielzelle(n) bei der weiteren Vermessung der über den Rundfunkkanal konfigurierten Nachbarschaftszellen auszuschließen.

3. Verfahren nach Anspruch 1, **dadurch gekennzeichnet, dass** das mobile Endgerät zur Vermeidung von unnötigen Identifikationen von Nachbarschaftszellen Informationen über bestimmte Zielzellen speichert und diese dazu verwendet, diese potentielle(n) Zielzelle(n) bei der weiteren Identifikation der über den Rundfunkkanal konfigurierten Nachbarschaftszellen auszuschließen.

4. Verfahren nach Anspruch 1 bis 3, **dadurch gekennzeichnet, dass** das mobile Endgerät nach einem beliebigen Funkstandard wie zum Beispiel enhanced UTRAN, IEEE 802.11, WiMAX, WiBro, cdma 2000 arbeitet.

5. Verfahren nach Anspruch 1 bis 4, **dadurch gekennzeichnet, dass** ein Mobiltelefon nach GSM-, UMTS- oder enhanced UTRAN-Standard Nachbarzellen, die zu Location Areas gehören in denen es bereits durch ein Reject des Location Area Update LAU abgelehnt wurde, von weiteren Messungen oder Identifikationsprozeduren ausschließt.

6. Verfahren nach Anspruch 1 bis 4, **dadurch gekennzeichnet, dass** ein Mobiltelefon nach GSM-, UMTS- oder enhanced UTRAN-Standard Nachbarzellen, die zu Routing Areas gehören, die bereits durch ein Reject des Routing Area Update RAU abgelehnt wurden, von weiteren Messungen oder Identifikationsprozeduren ausschließt.

7. Verfahren nach Anspruch 5 oder 6, **dadurch gekennzeichnet, dass** das Mobiltelefon Nachbarzellen, die in einer "Liste der verbotenen Location Areas LA für Roaming" als abgelehnt enthalten sind, von weiteren Messungen oder Identifikationsprozeduren ausschließt.

8. Verfahren nach Anspruch 1 bis 4 **dadurch gekennzeichnet, dass** ein mobiles Teilnehmerendgerät nach WLAN-Standard IEEE 802.11 Nachbarzellen oder Access Points AP, die eine nicht nutzbare Kennung, beispielsweise eine "SSID" abstrahlen, von weiteren Messungen oder Identifikationsprozeduren ausschließt, nachdem es erkannt hat, dass diese nicht nutzbar sind.

9. Verfahren nach Anspruch 8, **dadurch gekennzeichnet, dass** die Access Points auf einem Rundfunkkanal einer anderen Radiotechnologie als der gerade vom mobilen Endgerät verwendeten Radiotechnologie abstrahlen.

10. Verfahren nach einem der Ansprüche 1, bis 3, **dadurch gekennzeichnet, dass** ein Mobiltelefon nach GSM-, UMTS- oder enhanced UTRAN-Standard Nachbarzellen von weiteren Messungen oder Identifikationsprozeduren ausschließt, die es bereits als nicht geeignet für einen Zellwechsel erkannt hat, da eine Zielzelle als gesperrt "Barred Cell" klassifiziert ist.

11. Verfahren nach einem der Ansprüche 1 bis 3, **dadurch gekennzeichnet, dass** ein Mobiltelefon nach GSM-, UMTS- oder enhanced UTRAN-Standard Nachbarzellen von weiteren Messungen ausschließt, die es als nicht geeignet für einen Zellwechsel erkannt hat da eine Zielzelle als für Betreiber-Endgeräte reserviert "Operator Reserved Cell" klassifiziert ist.

12. Verfahren nach Anspruch 1, 2 sowie 8, 9, **dadurch gekennzeichnet, dass** ein Mobiltelefon nach GSM-, UMTS- oder enhanced UTRAN-Standard Nachbarzellen von weiteren Messungen oder Identifikationsprozeduren ausschließt, die es als nicht geeignet für einen Zellwechsel erkannt hat, da eine Zielzelle als nicht geeignet für einen Zellwechsel klassifiziert ist.

13. Verfahren nach Anspruch 1, **dadurch gekennzeichnet, dass** ein Mobiltelefon nach einem bekannten Standard - außer GSM- oder UMTS - Nachbarzellen von weiteren Messungen oder Identifikationsprozeduren ausschließt, die es als nicht geeignet für einen Zellwechsel erkannt hat da eine Zielzelle als nicht geeignet für einen Zellwechsel klassifiziert ist.

14. Verfahren nach einem der Ansprüche 1 bis 14, **dadurch gekennzeichnet, dass** ein Mobilfunkendgerät, welches die Messungen von nicht geeigneten Zielzellen unterdrückt hat, das Messen dieser Zielzellen wieder aufnimmt, nachdem eine definierte Zeit vergangen ist.

15. Verfahren nach einem der Ansprüche 1-14, **dadurch gekennzeichnet, dass** ein Mobilfunkendgerät, welches die Messungen oder Identifikationsprozeduren von nicht geeigneten Zielzellen unterdrückt hat, das Messen oder die Identifikationsprozeduren dieser Zielzellen wieder aufnimmt, nachdem es aus und wieder eingeschaltet wurde.

16. Verfahren nach einem der Ansprüche 1-14, **dadurch gekennzeichnet, dass** ein Mobilfunkendgerät, welches die Messungen oder Identifikationsprozeduren von nicht geeigneten Zielzellen unterdrückt hat, das Messen oder die Identifikationsprozeduren dieser Zielzellen wieder aufnimmt, nachdem es einen Zellwechsel in eine andere Zelle vorgenommen hat.

17. Verfahren nach einem der Ansprüche 1-14, **dadurch gekennzeichnet, dass** ein Mobilfunkendgerät, welches die Messungen oder Identifikationsprozeduren der nicht geeigneten Zielzellen unterdrückt hat, das Messen oder die Identifikationsprozeduren dieser Zielzellen wieder aufnimmt, nachdem eine dedizierte Nachricht zum Messen dieser Zielzellen vom Mobilfunknetz empfangen hat.

18. Computerprogramm mit einem Programmcode, der auf einem Mobilfunkendgerät ausgeführt ein Verfahren nach einem der Ansprüche 1 bis 17 durchführt.

19. Mobiles Endgerät, welches zur Durchführung des Verfahrens gemäß den Ansprüchen 1 bis 17 eingerichtet ist.

## Claims

1. Method for the optimisation of times of being ready for service and cell-change performance of mobile terminals in a mobile communications network with adjacent cells, wherein a mobile terminal during operation in a mobile communications network temporarily stores network-specific codes of unusable neighbouring cells and uses them for a cell change in the decision criteria, **characterised in that** the mobile terminal suppresses radio measurement and the procedures for code identification of cells which are not suitable as candidates for a cell change, and so the number of measurements to be carried out by the mobile terminal during operation is reduced.

2. Method according to claim 1, **characterised in that** the mobile terminal stores information on certain destination cells to avoid unnecessary measurements of neighbouring cells, and uses it to exclude these potential destination cells during further measurement of the neighbouring cells configured via the radio channel.

3. Method according to claim 1, **characterised in that** the mobile terminal stores information on certain destination cells to avoid unnecessary identifications of neighbouring cells, and uses it to exclude these potential destination cells during further identification of the neighbouring cells configured via the radio channel.

4. Method according to claims 1 to 3, **characterised in that** the mobile terminal operates according to any radio standard such as for example enhanced UTRAN, IEEE 802.11, WiMAX, WiBro, cdma 2000.

5. Method according to claims 1 to 4, **characterised in that** according to GSM, UMTS or enhanced UTRAN standard a mobile telephone excludes neighbouring cells which belong to the location areas in which it has already been rejected by a reject of the location area update LAU, from further measurements or identification procedures.

6. Method according to claims 1 to 4, **characterised in that** according to GSM, UMTS or enhanced UTRAN standard a mobile telephone excludes neighbouring cells which belong to routing areas which have already been rejected by a reject of the routing area update RAU, from further measurements or identification procedures.

7. Method according to claim 5 or 6, **characterised in that** the mobile telephone excludes neighbouring cells which are included in a "list of forbidden location areas LA for roaming" as rejected, from further measurements or identification procedures.

8. Method according to claims 1 to 4, **characterised in that** according to WLAN standard IEEE 802.11 a mobile subscriber terminal excludes neighbouring cells or access points AP which emit an unusable code, for example an "SSID", from further measurements or identification procedures after it has detected that they are not usable.

9. Method according to claim 8, **characterised in that** the access points emit on a radio channel with a different radio technology to the radio technology which has just been used by the mobile terminal.

10. Method according to one of claims 1 to 3, **characterised in that** according to GSM, UMTS or enhanced UTRAN standard a mobile telephone excludes from further measurements or identification procedures neighbouring cells which it has already detected as not suitable for a cell change because a destination cell is classified as a barred cell.

11. Method according to one of claims 1 to 3, **characterised in that** according to GSM, UMTS or enhanced UTRAN standard a mobile telephone excludes from further measurements neighbouring cells which it has detected as not suitable for a cell change because a destination cell is classified as an operator-reserved cell reserved for operator terminals.

12. Method according to claims 1, 2 and 8, 9, **characterised in that** according to GSM, UMTS or enhanced UTRAN standard a mobile telephone excludes from further measurements or identification procedures neighbouring cells which it has detected as not suitable for a cell change because a destination cell is classified as not suitable for a cell change.

13. Method according to claim 1, **characterised in that** according to a known standard - apart from GSM or UMTS - a mobile telephone excludes from further measurements or identification procedures neighbouring cells which it has detected as not suitable for a cell change because a destination cell is classified as not suitable for a cell change.

14. Method according to one of claims 1 to 14, **characterised in that** a mobile telephone terminal which has suppressed the measurements of unsuitable destination cells resumes the measurement of these destination cells after a given time has passed.

15. Method according to one of claims 1-14, **characterised in that** a mobile telephone terminal which has suppressed the measurements or identification procedures of unsuitable destination cells resumes the measurement or the identification procedures of these destination cells after it has been switched off and back on.

16. Method according to one of claims 1-14, **characterised in that** a mobile telephone terminal which has suppressed the measurements or identification procedures of unsuitable destination cells resumes the measurement or the identification procedures of these destination cells after it has performed a cell change to another cell.

17. Method according to one of claims 1-14, **characterised in that** a mobile telephone terminal which has suppressed the measurements or identification procedures of the unsuitable destination cells resumes the measurement or the identification procedures of these destination cells after it has received a dedicated message for measuring these destination cells from the mobile telephone network.

18. Computer program having a program code which, executed on a mobile telephone terminal, carries out a method according to one of claims 1 to 17.

19. Mobile terminal which is designed for carrying out the method according to claims 1 to 17.

## Revendications

1. Procédé pour optimiser les temps d'état de fonctionnement et la performance de changement de cellule de terminaux mobiles dans un réseau de communication mobile avec des cellules radio voisines, selon lequel un terminal mobile, lorsqu'il fonctionne dans un réseau de communication mobile, met en mémoire temporairement des identifications propres au réseau de cellules voisines non utilisables et utilise ces identifications en présence de critères de décision pour un changement de cellule, **caractérisé en ce que** le terminal mobile interdit la mesure technique radio et les procédures d'identification de cellules qui ne conviennent pas comme candidates pour un changement de cellule, et le nombre de mesures à effectuer en fonctionnement par le terminal mobile est ainsi réduit.

2. Procédé selon la revendication 1, **caractérisé en ce que** le terminal mobile, pour éviter des mesures inutiles de cellules du voisinage, met en mémoire des informations sur des cellules cibles définies et utilise ces informations pour exclure cette ou ces cellules cibles potentielles lors de la poursuite de la mesure des cellules du voisinage configurées par l'intermédiaire du canal radio.

3. Procédé selon la revendication 1, **caractérisé en ce que** le terminal mobile, pour éviter des identifications inutiles de cellules du voisinage, met en mémoire des informations sur des cellules cibles définies et utilise ces informations pour exclure cette ou ces cellules cibles potentielles lors de la poursuite de l'identification des cellules du voisinage configurées par l'intermédiaire du canal radio.

4. Procédé selon les revendications 1 à 3, **caractérisé en ce que** le terminal mobile fonctionne suivant n'importe quelle norme radio, comme par exemple enhanced UTRAN, IEEE 802.11, WiMAX, WiBro, cdma 2000.

5. Procédé selon les revendications 1 à 4, **caractérisé en ce qu'**un téléphone mobile selon la norme GSM, UMTS ou enhanced UTRAN exclut d'autres mesures ou procédures d'identification les cellules voisines qui appartiennent à des zones de localisation dans lesquelles il a déjà été refusé par un rejet de mise à jour de localisation LAU (Location Area Update).

6. Procédé selon les revendications 1 à 4, **caractérisé en ce qu'**un téléphone mobile selon la norme GSM, UMTS ou enhanced UTRAN exclut d'autres mesures ou procédures d'identification les cellules voisines qui appartiennent à des zones d'acheminement qui ont déjà été refusées par un rejet de mise à jour d'acheminement RAU (Routing Area Update).

7. Procédé selon la revendication 5 ou 6, **caractérisé en ce que** le téléphone mobile exclut d'autres mesures ou procédures d'identification des cellules voisines qui sont contenues comme refusées dans une "liste des zones de localisation LA interdites pour l'itinérance".

8. Procédé selon les revendications 1 à 4, **caractérisé en ce qu'**un terminal mobile d'abonné selon la norme WLAN IEEE 802.11 exclut d'autres mesures ou procédures d'identification des cellules voisines ou des points d'accès AP qui émettent une identification non exploitable, par exemple une "SSID", après avoir constaté que celles-ci n'étaient pas exploitables.

9. Procédé selon la revendication 8, **caractérisé en ce que** les points d'accès émettent sur un canal radio d'une technologie radio différente de la technologie radio justement utilisée par le terminal mobile.

10. Procédé selon l'une des revendications 1 à 3, **caractérisé en ce qu'**un téléphone mobile selon la norme GSM, UMTS ou enhanced UTRAN exclut d'autres mesures ou procédures d'identification des cellules voisines qu'il a déjà repérées comme non appropriées pour un changement de cellule, étant donné qu'une cellule cible est classée comme interdite "Barred Cell".

11. Procédé selon l'une des revendications 1 à 3, **caractérisé en ce qu'**un téléphone mobile selon la norme GSM, UMTS ou enhanced UTRAN exclut d'autres mesures des cellules voisines qu'il a repérées comme non appropriées pour un changement de cellule, étant donné qu'une cellule cible est classée comme réservée pour terminaux d'opérateur "Operator Reserved Cell".

12. Procédé selon les revendications 1, 2 et 8, 9, **caractérisé en ce qu'**un téléphone mobile selon la norme GSM, UMTS ou enhanced UTRAN exclut d'autres mesures ou procédures d'identification des cellules voisines qu'il a repérées comme non appropriées pour un changement de cellule, étant donné qu'une cellule cible est classée comme non appropriée pour un changement de cellule.

13. Procédé selon la revendication 1, **caractérisé en ce qu'**un téléphone mobile selon une norme connue - en dehors de GSM ou UMTS - exclut d'autres mesures ou procédures d'identification des cellules voisines qu'il a repérées comme non appropriées pour un changement de cellule, étant donné qu'une cellule cible est classée comme non appropriée pour un changement de cellule.

14. Procédé selon l'une des revendications 1 à 14, **caractérisé en ce qu'**un terminal de téléphonie mobile qui a interdit les mesures de cellules cibles non appropriées reprend la mesure de ces cellules cibles après qu'une durée définie s'est écoulée.

15. Procédé selon l'une des revendications 1 à 14, **caractérisé en ce qu'**un terminal de téléphonie mobile qui a interdit les mesures ou procédures d'identification de cellules cibles non appropriées reprend la mesure ou les procédures d'identification de ces cellules cibles après qu'il a été éteint et rallumé.

16. Procédé selon l'une des revendications 1 à 14, **caractérisé en ce qu'**un terminal de téléphonie mobile qui a interdit les mesures ou procédures d'identification de cellules cibles non appropriées reprend la mesure ou les procédures d'identification de ces cellules cibles après qu'il a effectué un changement de cellule vers une autre cellule.

17. Procédé selon l'une des revendications 1 à 14, **caractérisé en ce qu'**un terminal de téléphonie mobile qui a interdit les mesures ou procédures d'identification de cellules cibles non appropriées reprend la mesure ou les procédures d'identification de ces cellules cibles après qu'il a reçu du réseau de téléphonie mobile un message spécialisé pour la mesure de ces cellules cibles.

18. Programme informatique avec un code de programme qui, exécuté sur un terminal de téléphonie mobile, met en oeuvre un procédé selon l'une des revendications 1 à 17.

19. Terminal mobile qui est installé en vue de mettre en oeuvre le procédé selon les revendications 1 à 17.
